# EUROPÄISCHE PATENTANMELDUNG

(11) **EP 3 418 084 A1**
(43) Veröffentlichungstag der Anmeldung: **26.12.2018**
(21) Anmeldenummer: 18178176.6
(22) Anmeldetag: 18.06.2018
(51) Int. Cl.: B60D 5/00, B61D 17/20, B62D 47/02

(54) **BUS MIT EINEM KUPPELBAREN ÜBERGANG**

(30) Priorität: 20.06.2017 DE 102017113578
(71) Anmelder: Hübner GmbH & Co. KG, 34123 Kassel (DE)
(72) Erfinder: Karasek, Jens, 34260 Kaufungen (DE); Schulz, Ralf, 34317 Habichtswald (DE)
(74) Vertreter: Patentanwälte Walther Hinz Bayer PartGmbB

(57) **Zusammenfassung**

Gegenstand der Erfindung ist ein Bus mit einem kuppelbaren Übergang (1) zur beweglichen Verbindung von zwei Wagenteilen (10, 11) des Busses, mit einem Gelenk (12) zur kraftübertragenden Verbindung zwischen den Wagenteilen (10, 11) und mit einem Balg (13) zur Bildung eines begehbaren Übergangsbereiches. Erfindungsgemäß ist
- an wenigstens einem Wagenteil (10) ein Wagenquerträger (14) mit Kupplungsmitteln (15) angeordnet und
- am Gelenk (12) wenigstens ein Gelenkquerträger (16) mit Gegenkupplungsmitteln (17) angeordnet ist, wobei
- die Kupplungsmittel (15) und die Gegenkupplungsmittel (17) zur Erzeugung einer kraftübertragenden Verbindung zwischen dem Gelenk (12) und dem wenigstens einen Wagenteil (10, 11) miteinander kuppelbar sind,

## Beschreibung

Die Erfindung betrifft einen Bus mit einem kuppelbaren Übergang zur beweglichen Verbindung von zwei Wagenteilen des Busses, mit einem Gelenk zur kraftübertragenden Verbindung zwischen den Wagenteilen und mit einem Balg zur Bildung eines begehbaren Übergangsbereiches. Die Erfindung ist weiterhin gerichtet auf einen kuppelbaren Übergang zur beweglichen Verbindung von zwei Wagenteilen des Busses.

### STAND DER TECHNIK

Ein Bus mit einem kuppelbaren Übergang ist beispielsweise aus der DE 20 2006 014 539 U1 bekannt. Der Bus wird als modular aufbaubares Fahrzeug beschrieben, in dem zwei Fahrzeugteile entweder direkt oder mittels einem passiven, zwischen den beiden Fahrzeugteilen anordbaren weiterem Fahrzeugteil gekuppelt werden können. So kann der Bus an eine notwendige Förderkapazität angepasst werden, wobei die Trennung der Fahrzeugteile voneinander mit einer Verbindungseinrichtung möglich ist, die im Übergang selbst angeordnet ist. Sowohl die kraftübertragenden Mittel, also das Gelenk zwischen den Fahrzeugteilen, als auch der Balg zur Bildung des Übergangs müssen dabei doppelt vorhanden sein, wodurch der Übergang aufwendig konstruiert werden muss. Insbesondere dann, wenn nicht ausschließlich 2-achsige Fahrzeugteile miteinander modular verbunden werden müssen, ist eine solche Teilungsebene im Übergang selbst nachteilhaft, da Gelenke mit einer oder mit zwei Nickachsen erforderlich werden, abhängig davon, ob der angekuppelte Wagenteil einachsig oder zweiachsig ausgebildet ist.

Aus der EP 2 002 998 ist ein kuppelbarer Übergang mit einem Balg bekannt, der einen Kuppelrahmen aufweist, der mittels des Kuppelrahmens von der Stirnseite eines Wagenteils trennbar ist. Der Kuppelrahmen weist zur Trennung manuell bedienbare Elemente auf, wobei zur vollständigen Abtrennung eines Wagenteils auf eine lösbare Verbindung eines Gelenkes zur kraftübertragenden Verbindung der Wagenteile nicht näher eingegangen wird.

Die Kuppelbarkeit der Wagenteile sollte dabei so erfolgen, dass eine sichere Kraftübertragung möglich ist, die über die Kuppelungsmittel geleitet wird, wobei die Kupplungsmittel leicht und ohne großen Zeitaufwand zu trennen sein müssen. Zudem sollte der Übergang möglichst nicht weniger aufwendig ausgestaltet werden, als für nicht kuppelbare Übergänge bekannt. Beispielsweise sollte das Gelenk in einfacher Weise aus nur einer Drehachse und einer oder zwei Nickachsen aufgebaut werden können.

Beispielsweise zeigt die DE 10 2005 035 561 A1 eine Verbindung zwischen zwei Wagenteilen mit einem einfachen Kreuzgelenk, das lediglich Anwendung finden kann für einen Gelenkbus, der als sogenannter Puller ausgebildet ist, dies sind Busse, bei denen im Bereich der Hinterachse des vorderen Wagenteils der Motor sitzt, wobei dieser Motor die Hinterachse des vorderen Wagenteils antreibt. Der hintere Wagenteil wird folglich lediglich nachgezogen, sodass keine Schubkraft vom hinteren auf den vorderen Wagenteil übertragen werden muss.

### OFFENBARUNG DER ERFINDUNG

Aufgabe der Erfindung ist die Weiterbildung eines Busses mit einem kuppelbaren Übergang sowie die Weiterbildung eines solchen kuppelbaren Übergangs, welcher die Wagenteile auf einfache Weise kraftübertragend miteinander verbindbar und voneinander trennbar macht.

Diese Aufgabe wird ausgehend von einem Bus mit einem kuppelbaren Übergang zur beweglichen Verbindung von zwei Wagenteilen gemäß dem Oberbegriff des Anspruches 1 und ausgehend von einem kuppelbaren Übergang zur beweglichen Verbindung der zwei Wagenteile des Busses gemäß dem Oberbegriff des Anspruches 11 gelöst. Vorteilhafte Weiterbildungen der Erfindung sind in den abhängigen Ansprüchen angegeben.

Die Erfindung schließt die technische Lehre ein, dass an wenigstens einem Wagenteil ein Wagenquerträger mit Kupplungsmitteln angeordnet ist, und dass am Gelenk wenigstens ein Gelenkquerträger mit Gegenkupplungsmitteln angeordnet ist, wobei die Kupplungsmittel und die Gegenkupplungsmittel zur Erzeugung einer kraftübertragenden Verbindung zwischen dem Gelenk und dem wenigstens einen Wagenteil miteinander kuppelbar sind.

Die erfindungsgemäße Weiterbildung des kuppelbaren Übergangs ermöglicht die Trennung des Übergangs von der Stirnseite eines Wagenteils, in dem durch ein Lösen der Kupplungsmittel von den Gegenkupplungsmitteln der Wagenquerträger vom Gelenkquerträger getrennt werden kann. Die Kuppelebene ist beispielsweise ausgebildet zwischen dem Übergang und einem vorderen Wagenteil, sodass an das hintere Ende des vorderen Wagenteils entweder ein hinterer Wagenteil angeordnet werden kann oder an das hintere Ende des vorderen Wagenteils kann ein Zwischensegment des Busses angeordnet werden, an das wiederum der hintere Wagenteil rückseitig angebunden werden kann.

Mit der Ausgestaltung eines Wagenquerträgers zur parallelen Anordnung an einen Gelenkquerträger mit entsprechenden Kupplungsmitteln ist eine kraftübertragende Verbindung zwischen den Wagenteilen möglich, und das Gelenk kann so ausgeführt werden, dass der Bus nicht nur als Puller sondern auch als Pusher ausgeführt werden kann, indem nämlich der Motor im hinteren Wagenteil angeordnet ist und über das Gelenk eine Schubkraft auf den vorderen Wagenteil ausübt. Durch die Verwendung von zwei miteinander kuppelbaren Querträgern sind hohe Kräfte übertragbar, insbesondere dann, wenn der Gelenkquerträger Teil des Gelenkes ist, und der Wagenquerträger Teil des Wagenteils ist.

In gekuppeltem Zustand der Wagenteile liegt der Wagenquerträger unmittelbar an dem Gelenkquerträger und die beiden Querträger sind mit den Kupplungsmitteln miteinander verbunden. Folglich ist auch das Gelenk kraftübertragend mit dem Wagenteil verbunden. Das Gelenk kann mit Vorteil auf gewöhnliche Weise ausgeführt werden, beispielsweise mit einer Drehachse und wenigstens einer Nickachse. Auch der Balg kann auf einfache Weise ausgeführt werden, wie dieser auch ausgeführt sein kann für Busse, die nicht kuppelbare Übergänge aufweisen.

Der Balg weist mit Vorteil wenigstens einen Kuppelrahmen auf, mit dem dieser an dem Wagenteil lösbar ankuppelbar ist, an dem der Wagenquerträger angeordnet ist. Ein besonderer Vorteil wird erreicht, wenn der Kuppelrahmen und der Wagenquerträger in einer gemeinsamen Kuppelebene an der Stirnseite des Wagenteils angeordnet sind. Wird der Gelenkquerträger am Wagenquerträger mit den Kupplungsmitteln befestigt, kann zugleich auch der Kuppelrahmen des Balges an einem gegenüberliegenden und komplementär ausgeführten Aufnahmerahmen an der Stirnseite des Wagenteils befestigt werden. Soll der Balg vom Wagenteil gelöst werden, kann zunächst der Kuppelrahmen wieder vom Aufnahmerahmen gelöst und der Gelenkquerträger vom Wagenquerträger durch ein Lösen der Kupplungsmittel getrennt werden. Der Aufnahmerahmen der austauschbar ausgeführten Wagenteile des Busses ist dabei gleich ausgeführt, sodass der Kuppelrahmen des Balges wechselweise mit verschiedenen Wagenteilen verbunden werden kann.

Eine Weiterbildung des Überganges sieht vor, dass untere Abschnitte des Kuppelrahmens sich außenseitig in einer Querachse des Gelenkquerträgers erstrecken und sich an beiden Endseiten an den Gelenkquerträger anschließen, sodass der Gelenkquerträger und der Kuppelrahmen an der Stirnseite des Überganges eine geschlossene Kontur bilden.

Der Kuppelrahmen des Balges und der Gelenkquerträger weisen mit Vorteil eine gemeinsame Stirnebene auf, weiterhin weist am Wagenteil der Aufnahmerahmen für den Kuppelrahmen und der Wagenquerträger eine gemeinsame Stirnebene auf. Sollen der Übergang und der Wagenteil miteinander verbunden werden, so werden Stirnebene auf Stirnebene angeordnet und der Wagenquerträger wird mit den Kupplungsmitteln mit dem Gelenkquerträger verbunden, der Kuppelrahmen wird mit dem Aufnahmerahmen verbunden.

Der Übergang kann durch die erfindungsgemäßen Merkmale des Busses mit einem Gelenk zur kraftübertragenden Verbindung zwischen den Wagenteilen ausgeführt sein, sodass der Bus auch als Pusher konstruiert sein kann, indem der Motor im hinteren Wagenteil angeordnet ist. Hierfür weist das Gelenk eine Drehachse und wenigstens eine Nickachse auf, wobei die Nickachse mit wenigstens einem Achsbauteil am Gelenkquerträger angeordnet ist. Das wenigstens eine Achsbauteil der Nickachse ist mit weiterem Vorteil auf einer zur Anordnung der Gelenkkupplungsmittel gegenüberliegenden Seite am Gelenkquerträger angeordnet. Der Gelenkquerträger weist beispielsweise ein Kastenprofil auf, das sich quer zur Fahrzeuglängsrichtung länglich erstreckt und sodass der Gelenkquerträger zwei gegenüberliegende Seiten bildet.

Eine vorteilhafte Ausführungsform der Kupplungsmittel und der Gegenkupplungsmittel weist wenigstens ein Kegelelement und eine Kegelvertiefung auf, wobei das Kegelelement das Kupplungsmittel oder das Gegenkupplungsmittel bilden kann, sodass entsprechend die Kegelvertiefung das Gegenkupplungsmittel bzw. das Kupplungsmittel bilden kann. Wird der Wagenquerträger an dem Gelenkquerträger angeordnet, kann das Kegelelement in die Kegelvertiefung eingesetzt werden, wodurch in mehreren Freiheitsgraden ein Formschluss erreicht wird. Weiterhin können das Kupplungsmittel und das Gegenkupplungsmittel wenigstens einen Fangbolzen und eine Fangbolzenaufnahme aufweisen. Dabei ist es von Vorteil, wenn das Kegelelement und der Fangbolzen jeweils hervorstehend ausgeführt sind. Die Fangbolzenaufnahme ist mit Vorteil ebenfalls kegelförmig ausgeführt und bildet eine Kegelvertiefung, in die der Fangbolzen eingeführt werden kann. Dem hervorstehenden Kegelelement und dem hervorstehenden Fangbolzen auf der einen Seite stehen somit die Kegelvertiefungen auf der anderen Seite gegenüber, von denen zwei auf die Breitenrichtung der Träger bezogen beispielsweise mittlere Kegelvertiefungen die Fangbolzenaufnahmen bilden.

Der Fangbolzen erstreckt sich mit einer größeren Länge aus der Seite des Querträgers heraus, sodass durch das Einführen des Fangbolzens in die kegelförmige Fangbolzenaufnahme eine Zentrierung stattfindet, und wenn der Fangbolzen in der kegelförmigen Fangbolzenaufnahme durch ein weiteres Einführen zentriert ist und der Wagenquerträger und der Gelenkquerträger schließlich aufeinander gebracht werden, ist auch das Kegelelement in der Kegelvertiefung konzentrisch angeordnet. Mit besonderem Vorteil weist das Kupplungsmittel bzw. das Gegenkupplungsmittel zwei beabstandet zueinander angeordnete Kegelelemente und zwei beabstandet zueinander angeordnete Kegelvertiefungen auf, dementsprechend sind auch zwei beabstandet zueinander angeordnete Fangbolzen und Fangbolzenaufnahmen vorgesehen. Der Abstand der jeweiligen Kegelelemente zueinander entspricht dabei dem Abstand der jeweiligen Kegelvertiefung zueinander, der Abstand der Fangbolzen entspricht dem Abstand der Fangbolzenaufnahme. Über die Quererstreckung der Querträger können dabei mit besonderem Vorteil die Kegelelemente und die Kegelvertiefungen außenseitig angeordnet sein, während die Fangbolzen und die Fangbolzenaufnahmen innenseitig und dennoch beabstandet zueinander an dem Querträger angeordnet sind.

Gemäß einem vorteilhaften Ausführungsbeispiel bilden die Kegelvertiefung und/oder die Fangbolzenaufnahme das Kupplungsmittel und das Kegelelement und/oder der Fangbolzen bilden das Gegenkupplungsmittel.

Eine vorteilhafte Weiterbildung der Kupplungsmittel sieht vor, dass das Kegelelement in der Kegelvertiefung zur Umsetzung einer einfachen Verbindungstechnik mit einem Schraubelement lösbar verschraubt ist. Dadurch kann das Kegelelement in der Kegelvertiefung gesichert werden, wobei das Schraubelement mit weiterem Vorteil koaxial zur Rotationsachse des Kegelelementes bzw. der Kegelvertiefung angeordnet sein kann. Das Schraubelement zieht dabei durch ein Festziehen desselben das Kegelelement in die Kegelvertiefung. Dadurch entsteht eine hochbelastbare, verliersichere Verbindung zwischen dem Kegelelement und Steckkegelvertiefung.

Gemäß einer alternativen Variante kann statt eines Schraubelementes zur Verschraubung des Kegelelementes in der Kegelvertiefung auch eine Vorrichtung vorgesehen werden, mit der die Anordnung des Kegelelementes in der Kegelvertiefung durch eine wenigstens halbautomatische Betätigung der Vorrichtung gesichert wird. Die Vorrichtung stellt damit eine aufwendigere Verbindungstechnik dar und umfasst beispielsweise eine pneumatische, elektronische oder hydraulische Betätigungseinheit mit einem dem Schraubelement in der Funktion ähnlichen Element, beispielsweise ein Zugbolzen oder dergleichen, der elektrisch, pneumatisch oder hydraulisch betätigbar ist und das bzw. der zur Sicherung des Kegelelementes in der Kegelvertiefung ausgeführt ist.

Mit weiterem Vorteil ist der Fangbolzen in der Fangbolzenaufnahme mit einem Sicherungsstift gesichert. Diese Sicherung ist dabei nicht Teil der Kraftübertragungsmittel, wenn jedoch das Schraubelement gelöst wird, und sich das Kegelelement aus der Kegelvertiefung bewegt, sichert vor einem endgültigen Trennen des Wagenquerträgers vom Gelenkquerträger der Sicherungsstift noch den Fangbolzen in der Fangbolzenaufnahme. Wird der Sicherungsstift entnommen, kann eine vollständige Trennung der beiden Querträger voneinander erfolgen.

Mit besonderem Vorteil ist der Wagenquerträger struktureller Bestandteil des Wagenteils oder der Wagenquerträger ist ein an den Wagenteil anbringbarer Adapter. Insbesondere ist der Wagenquerträger Bestandteil der Bodenbaugruppe des Wagenteils und kann einen Abschlussträger bilden, der an der Stirnseite des Wagenteils im Bodenbereich angeordnet ist.

Gemäß einer weiteren Variante sind der Wagenquerträger und der Kuppelrahmen separate Baueinheiten, die am bestehenden Wagenteil angeordnet werden können. Damit können diese separaten Baueinheiten als jeweiliger Adapter zwischen dem bestehenden Wagenteil und dem kuppelbaren Übergang dienen.

Die Erfindung richtet sich weiterhin auf einen kuppelbaren Übergang zur beweglichen Verbindung von zwei Wagenteilen des Busses, mit einem Gelenk zur kraftübertragenden Verbindung zwischen den Wagenteilen und mit einem Ball zur Bildung eines begehbaren Übergangsbereiches. Erfindungsgemäß ist an wenigstens einem Wagenteil ein Wagenquerträger mit Kupplungsmitteln angeordnet und am Gelenk ist wenigstens ein Gelenkquerträger mit Gegenkupplungsmitteln angeordnet. Dabei sind die Kupplungsmittel und Gegenkupplungsmittel zur Erzeugung einer kraftübertragenden Verbindung zwischen dem Gelenk und dem wenigstens einen Wagenteil miteinander kuppelbar.

Mit besonderem Vorteil weist der Balg wenigstens einen Kuppelrahmen auf, mit dem dieser an dem Wagenteil lösbar ankuppelbar ist, an dem der Wagenquerträger angeordnet ist, und es ist weiterhin vorgesehen, dass der Kuppelrahmen und der Wagenquerträger in einer gemeinsamen Ebene an der Stirnseite des Wagenkastens angeordnet sind. Zudem kann wenigstens eine Kupplung zum lösbaren Verbinden von Versorgungsleitungen vorgesehen sein. Die Teilungsebene der Kupplung kann dabei beispielsweise in der Ebene zwischen dem Kuppelrahmen und dem Aufnahmerahmen liegen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Gesamtansicht eines Busses mit einem kuppelbaren Busübergang, aufweisend die Merkmale der vorliegenden Erfindung;
- Fig. 2: eine Detailansicht eines Übergangs mit den Gegenkupplungsmitteln;
- Fig. 3: eine Detailansicht eines Wagenteils mit an diesem angeordneten Kupplungsmitteln und
- Fig. 4: eine Schnittansicht durch die Verbindung eines Gelenkes an ein Wagenteil über aneinander angeordnete Querträger.

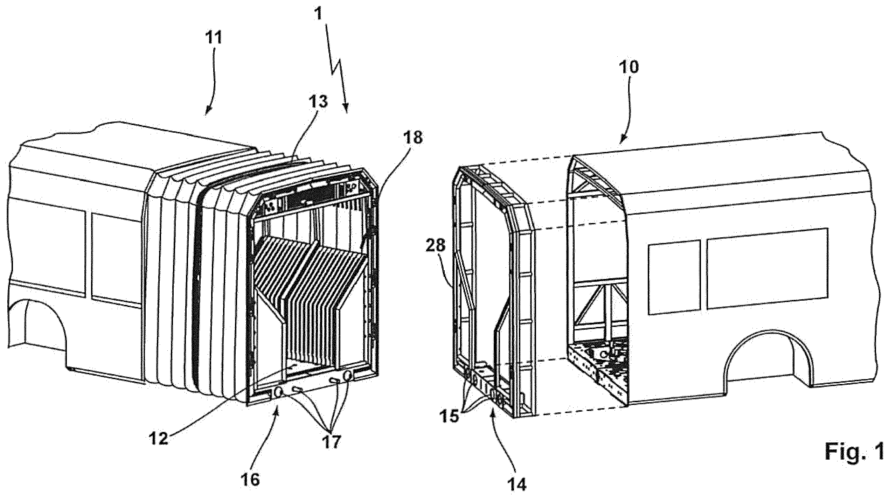

In Fig. 1 ist ein kuppelbarer Übergang eines Busses dargestellt, und der kuppelbare Übergang 1 dient zur Verbindung eines hinteren Wagenteils 10 mit einem vorderen Wagenteil 11. Der Übergang 1 ist am hinteren, stirnseitigen Ende des vorderen Wagenteils 11 angeordnet, wobei der hintere Wagenteil 10 in einer entkuppelten Position dargestellt ist. Der Übergang weist auf an sich bekannte Weise ein Gelenk 12 und einen Balg 13 auf. An der Vorderseite des Balges 13 befindet sich ein Kuppelrahmen 18, mit dem der Balg 13 am hinteren Wagenteil 10 befestigt werden kann.

Der hintere Wagenteil 10 weist einen Wagenquerträger 14 auf, der zur vereinzelten Darstellung getrennt vom übrigen Wagenteil 10 gezeigt ist. Dabei bildet der Wagenquerträger 14 mit dem gezeigten Aufnahmerahmen 28 einen strukturellen Bestandteil des Wagenteils 10, sodass die Darstellung des getrennten Wagenquerträgers 14 lediglich exemplarisch vorgenommen wurde, um den Wagenquerträger 14 als Einzelteil darzustellen. Der Wagenquerträger 14 kann dabei jedoch auch lösbar am Wagenteil 10 angeordnet sein. Gleiches gilt für den Aufnahmerahmen 28 zur Anordnung an dem Wagenteil 10.

Das freie Kuppelende des Übergangs 1 weist einen Gelenkquerträger 16 auf, der Gegenkupplungsmittel 17 umfasst, Der Wagenquerträger 14 am hinteren Wagenteil 10 umfasst Kupplungsmittel 15, die mit den Gegenkupplungsmitteln 17 verbunden werden können, wenn der Wagenquerträger 14 in Anlage gebracht wird an den Gelenkquerträger 16. Die Verbindung zwischen den Kupplungsmitteln 15 und den Gegenkupplungsmitteln 17 dient dabei zur Kraftübertragung der Kräfte, die mit dem Gelenk 12 des Übergangs 1 übertragen werden. Folgerichtig sind die Kupplungsmittel 15 in Verbindung mit den Gegenkupplungsmitteln 17 derart ausgeführt, dass die Betriebskräfte für den Hauptantrieb des Busses bei dessen Betrieb über die Kupplungs- und Gegenkupplungsmittel 15, 17 übertragen werden.

Sind die Querträger 14 und 16 miteinander verbunden, kann auch der Kuppelrahmen 18 mit dem Aufnahmerahmen 28 verbunden werden. Dabei bilden der Wagenquerträger 14 mit dem Aufnahmerahmen 28 eine gemeinsame stirnseitige Kuppelebene, auf die gleiche Weise bilden der Gelenkquerträger 16 und der Kuppelrahmen 18 eine gemeinsame stirnseitige Kuppelebene.

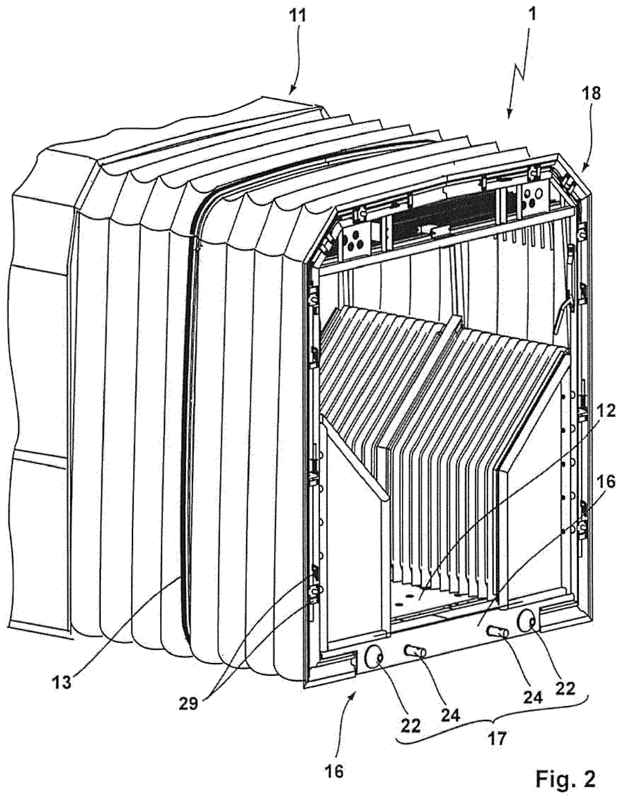

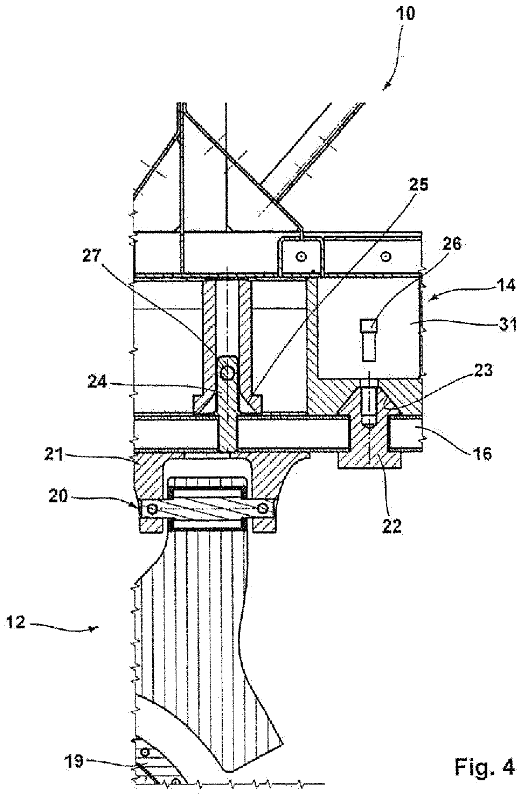

In Fig. 2 ist eine Detailansicht des kuppelbaren Übergangs 1 in Anordnung am Wagenteil 11 gezeigt. Das Gelenk 12 ist kraftübertragend verbunden mit dem Gelenkquerträger 16, und auf einer vorderen Seite sind am Gelenkquerträger 16 die Gegenkupplungsmittel 17 angeordnet. Diese umfassen zwei außenseitig angeordnete und damit zueinander beabstandete Kuppelelemente 22, und innenseitig zur Anordnung der beiden Kegelelemente 22 sind Fangbolzen 24 angeordnet. Auf der der Vorderseite gegenüberliegenden hinteren Seite des Gelenkquerträgers 16 ist das Gelenk 12 mit dem Gelenkquerträger 16 kraftübertragend verbunden, wie unten stehend in Zusammenhang mit Fig. 4 noch näher erläutert.

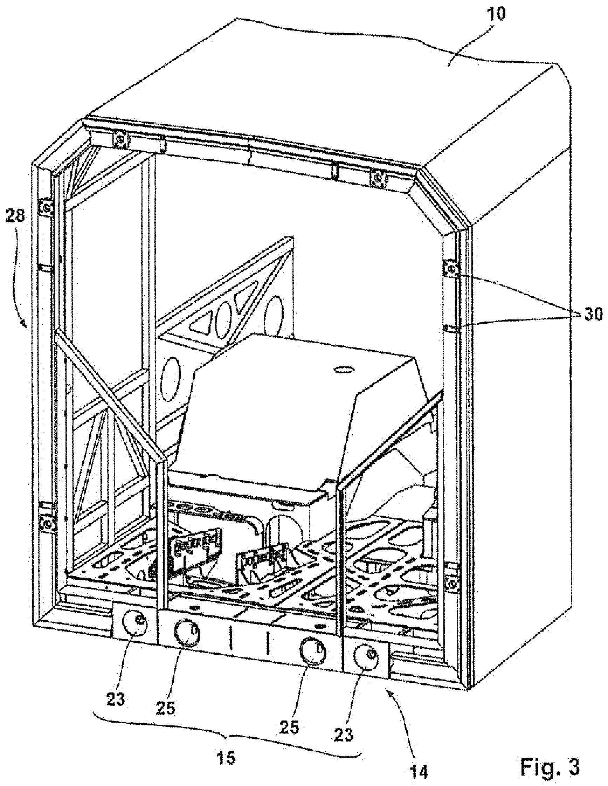

Der Balg 13 schließt vorderseitig ab mit dem Kuppelrahmen 18, welcher Kuppelmittel 29 umfasst, und die Kuppelmittel 29 können den Kuppelrahmen 18 verbinden mit dem Aufnahmerahmen 28, wie in Zusammenhang mit Fig. 3 beschrieben. Auf dem Umfang des Kuppelrahmens 18 verteilt sind dabei mehrere Kuppelmittel 29 vorgesehen. Diese können von Hand betätigt werden, und der Kuppelrahmen 18 kann vom Aufnahmerahmen 28 gemäß Fig. 3 vorher gelöst werden, bevor die Gegenkupplungsmittel 17 von den Kupplungsmitteln 15 gemäß Fig. 3 gelöst werden. Die Vorderseite des Gelenkquerträgers 16 bildet dabei eine Kuppelebene, die zusammenfällt mit der Kuppelebene des Kupplungsrahmens 18.

Untere Abschnitte des Kuppelrahmens 18 erstrecken sich in einer Querachse des Gelenkquerträgers 16 und schließen sich an beiden Endseiten an den Gelenkquerträger 16 an, sodass der Gelenkquerträger 16 und der Kuppelrahmen 18 an der Stirnseite des Überganges 1 eine geschlossene Kontur bilden.

Fig. 3 zeigt eine perspektivische Ansicht des hinteren Wagenteils 10 mit einer vorderen Kupplungsebene, in der der Wagenquerträger 14 unterseitig gelegen ist und über dem unterseitig angeordneten Wagenquerträger 14 erstreckt sich der Aufnahmerahmen 28. Der Wagenquerträger 14 weist wie auch der Gelenkquerträger gemäß Figur 3 eine Breite auf, die kleiner ist als die Breite des Wagenteils 10, und der Aufnahmerahmen 28 ist mit einem unteren Abschnitt beispielhaft in die Querachse des Wagenquerträgers 14 links und rechts des Wagenquerträgers 14 hineingeführt und verläuft somit außenseitig ebenfalls auf der Unterseite des Wagenteils 10 und schließt den Wagenquerträger 14 zwischen seinen Endseiten ein. Der Wagenquerträger 14 und der Aufnahmerahmen 28 ergänzen sich somit zu einer geschlossenen Kontur, mit der die Stirnfläche des Wagenteils 10 vollumfänglich umschlossen ist.

Vorderseitig am Wagenquerträger 14 sind die Kupplungsmittel angeordnet, umfassend zwei beabstandete Kegelvertiefungen 23, und benachbart an der Innenseite der Kegelvertiefungen 23 befinden sich Fangbolzenaufnahmen 25. Werden der Wagenquerträger 14 mit dem Gelenkquerträger 16 gemäß Fig. 2 aufeinandergebracht, können die Kegelelemente 22 in die Kegelvertiefungen eingesetzt werden, und die Fangbolzen 24 zentrieren sich in den Fangbolzenaufnahmen 25. Zugleich können die Kupplungsmittel 29 am Kuppelrahmen 18 mit den Gegenkupplungsmitteln 30 am Aufnahmerahmen 28 verbunden werden, indem die dafür vorgesehenen Hebel manuell betätigt werden. Somit kann eine Kupplung des hinteren Wagenteils 10 mit dem kuppelbaren Übergang 1 erfolgen, wobei die Kräfte über die Verbindung zwischen dem Wagenquerträger 14 und dem Gelenkquerträger 16 übertragen werden können.

In Fig. 4 ist eine Schnittansicht des Verbindungsbereiches zwischen dem Gelenk 12 des Übergangs und dem Wagenteil 10 dargestellt. Das Gelenk 12 weist eine abschnittsweise dargestellte Drehachse 19 und eine Nickachse 20 auf, wobei eine weitere Nickachse 20 zum vorderen Wagenteil 11 hin vorgesehen sein kann.

Die Nickachse 20 umfasst ein Achsbauteil 21, das an einer hinteren Seite des Gelenkquerträgers 16 befestigt ist. Am Gelenkquerträger 16 sind das Kegelelement 22 und der Fangbolzen 24 aufgenommen, wobei die Schnittansicht lediglich eine Hälfte des Gelenkquerträgers 16 zeigt, und die gleiche Anordnung des Kegelelementes 22 des Fangbolzens 24 wiederholt sich an einer gegenüberliegenden Seite.

Angrenzend an den Gelenkquerträger 16 ist der Wagenquerträger 14 dargestellt, der eine strukturelle Einheit bildet mit dem Wagenteil 10. Am Wagenquerträger 14 ist eine Kegelvertiefung 23 ausgebildet, in die sich das Kegelelement 22 hineinerstreckt. Das in die Kegelvertiefung 23 eingesetzte Kegelelement 22 kann nunmehr gesichert werden mit dem Schraubelement 26, das koaxial zur Rotationsachse des Kegelelementes 22 in diesem verschraubt werden kann. Hierfür weist die Kegelvertiefung 23 ein zentrisches Loch auf, durch das das Schraubelement 26 hindurchgeführt werden kann. Um das Schraubelement 26 mit einem Werkzeug zu bedienen, ist innerhalb des Wagenquerträgers 14 ein Montageraum 31 ausgebildet. Dieser Montageraum 31 kann alternativ als Aufnahmeraum genutzt werden, um eine pneumatisch, elektronisch oder hydraulisch arbeitende Vorrichtung unterzubringen, mit der die Querträger wenigstens halbautomatisch miteinander verbunden oder voneinander gelöst werden können.

Der Fangbolzen 24 erstreckt sich in eine Fangbolzenaufnahme 25 hinein, die in eine kegelartige Öffnung zur Vorderseite des Wagenquerträgers 14 hin geöffnet ist. Wird der Gelenkquerträger 16 an den Wagenquerträger 14 angenähert, so zentriert der Fangbolzen 24 in der Fangbolzenaufnahme 25, um schließlich in einem zylinderförmigen Fortsatz befestigt zu werden, insbesondere mit einem Sicherungsstift 27, der quer zur Erstreckung des Fangbolzens 24 in eine entsprechende Öffnung eingesetzt wird.

Die dargestellte Verbindung zwischen dem Gelenk 12 und dem Wagenteil 10 ist mechanisch belastbar und kann Schubkräfte aufnehmen, die über einen Motor vom hinteren Wagenteil 10 in einen vorderen Wagenteil 11 übertragen werden können sowie vertikale Kräfte, insbesondere betreffend die Gewichtskraft des Gelenkes und die Aufsattellast eines angekoppelten einachsigen Wagenteils sowie im Betrieb auftretende Querkräfte.

Die Erfindung beschränkt sich in ihrer Ausführung nicht auf das vorstehend angegebene bevorzugte Ausführungsbeispiel. Es ist eine Anzahl von Varianten denkbar, welche von der dargestellten Lösung auch bei grundsätzlich anders gearteten Ausführungen Gebrauch macht. Sämtliche aus den Ansprüchen der Beschreibung oder den Zeichnungen hervorgehenden Merkmale und/oder Vorteile, einschließlich konstruktiver Einzelheiten oder räumliche Anordnungen können sowohl für sich als auch in den verschiedensten Kombinationen erfindungswesentlich sein.

### Bezugszeichenliste:

- 1: kuppelbarer Übergang

- 10: Wagenteil
- 11: Wagenteil
- 12: Gelenk
- 13: Balg
- 14: Wagenquerträger
- 15: Kupplungsmittel
- 16: Gelenkquerträger
- 17: Gegenkupplungsmittel
- 18: Kuppelrahmen
- 19: Drehachse
- 20: Nickachse
- 21: Achsbauteil
- 22: Kegelelement
- 23: Kegelvertiefung
- 24: Fangbolzen
- 25: Fangbolzenaufnahme
- 26: Schraubelement
- 27: Sicherungsstift
- 28: Aufnahmerahmen
- 29: Kuppelmittel
- 30: Gegenkuppelmittel
- 31: Montageraum

## Patentansprüche

1. Bus mit einem kuppelbaren Übergang (1) zur beweglichen Verbindung von zwei Wagenteilen (10, 11) des Busses, mit einem Gelenk (12) zur kraftübertragenden Verbindung zwischen den Wagenteilen (10, 11) und mit einem Balg (13) zur Bildung eines begehbaren Übergangsbereiches,
**dadurch gekennzeichnet,**
**dass**
- an wenigstens einem Wagenteil (10) ein Wagenquerträger (14) mit Kupplungsmitteln (15) angeordnet ist und dass
- am Gelenk (12) wenigstens ein Gelenkquerträger (16) mit Gegenkupplungsmitteln (17) angeordnet ist, wobei
- die Kupplungsmittel (15) und die Gegenkupplungsmittel (17) zur Erzeugung einer kraftübertragenden Verbindung zwischen dem Gelenk (12) und dem wenigstens einen Wagenteil (10, 11) miteinander kuppelbar sind.

2. Bus nach Anspruch 1,
**dadurch gekennzeichnet,**
**dass** der Balg (13) wenigstens einen Kuppelrahmen (18) aufweist, mit dem der Balg (13) an dem Wagenteil (10, 11) lösbar ankuppelbar ist, an dem der Wagenquerträger (14) angeordnet ist.

3. Bus nach Anspruch 2,
**dadurch gekennzeichnet,**
**dass** der Kuppelrahmen (18) und der Gelenkquerträger (16) in einer gemeinsamen Kuppelebene an der Stirnseite des Wagenteils (10, 11) angeordnet sind.

4. Bus nach Anspruch 2 oder 3,
**dadurch gekennzeichnet,**
**dass** untere Abschnitte des Kuppelrahmens (18) sich in einer Querachse außenseitig zum Gelenkquerträger (16) längs erstrecken und sich an beiden Endseiten an den Gelenkquerträger (16) anschließen, sodass der Gelenkquerträger (16) und der Kuppelrahmen (18) an der Stirnseite des Überganges (1) eine geschlossene Kontur bilden
und/oder dass
untere Abschnitte eines mit dem Kuppelrahmen (18) verbindbaren Aufnahmerahmens (28) sich in einer Querachse außenseitig zum Wagenquerträger (14) längs erstrecken und sich an beiden Endseiten an den Wagenquerträger (14) anschließen, sodass der Wagenquerträger (14) und der Aufnahmerahmen (28) an der Stirnseite des Wagenteils (10) eine geschlossene Kontur bilden.

5. Bus nach einem der vorgenannten Ansprüche,
**dadurch gekennzeichnet,**
**dass** das Gelenk (12) zur kraftübertragenden Verbindung zwischen den Wagenteilen (10, 11) eine Drehachse (19) und wenigstens eine Nickachse (20) aufweist, wobei die Nickachse (20) mit wenigstens einem Achsbauteil (21) am Gelenkquerträger (16) angeordnet ist.

6. Bus nach Anspruch 5,
**dadurch gekennzeichnet,**
**dass** das wenigstens eine Achsbauteil (21) auf einer zur Anordnung der Gegenkupplungsmittel (17) gegenüberliegenden Seite am Gelenkquerträger (16) angeordnet ist.

7. Bus nach einem der vorgenannten Ansprüche,
**dadurch gekennzeichnet,**
**dass** die Kupplungsmittel (15) und die Gegenkupplungsmittel (17) wenigstens ein Kegelelement (22) und eine Kegelvertiefung (23) aufweisen und/oder dass die Kupplungsmittel (15) und die Gegenkupplungsmittel (17) wenigstens einen Fangbolzen (24) und eine Fangbolzenaufnahme (25) aufweisen.

8. Bus nach Anspruch 7,
**dadurch gekennzeichnet,**
**dass** die Kegelvertiefung (23) und/oder die Fangbolzenaufnahme (25) das Kupplungsmittel (15) bilden und dass das Kegelelement (22) und/oder der Fangbolzen (24) das Gegenkupplungsmittel (17) bilden.

9. Bus nach einem der Ansprüche 7 oder 8,
**dadurch gekennzeichnet,**
**dass** das Kegelelement (22) in der Kegelvertiefung (23) mit einem Schraubelement (26) oder mit einer elektrisch, pneumatisch oder hydraulisch betätigbaren Betätigungseinheit lösbar verbunden ist.

10. Bus nach einem der vorgenannten Ansprüche,
**dadurch gekennzeichnet,**
**dass** der Fangbolzen (24) in der Fangbolzenaufnahme (25) mit einem Sicherungsstift (27) gesichert ist.

11. Bus nach einem der vorgenannten Ansprüche,
**dadurch gekennzeichnet,**
**dass** der Wagenquerträger (14) struktureller Bestandteil des Wagenteils (10) ist oder dass der Wagenquerträger (14) ein an den Wagenteil (10) anbringbarer Adapter ist.

12. Kuppelbarer Übergang (1) zur beweglichen Verbindung von zwei Wagenteilen (10, 11) des Busses, mit einem Gelenk (12) zur kraftübertragenden Verbindung zwischen den Wagenteilen (10, 11) und mit einem Balg (13) zur Bildung eines begehbaren Übergangsbereiches,
**dadurch gekennzeichnet,**
**dass**
- an wenigstens einem Wagenteil (10) ein Wagenquerträger (14) mit Kupplungsmitteln (15) angeordnet ist und dass
- am Gelenk (12) wenigstens ein Gelenkquerträger (16) mit Gegenkupplungsmitteln (17) angeordnet ist, wobei
- die Kupplungsmittel (15) und die Gegenkupplungsmittel (17) zur Erzeugung einer kraftübertragenden Verbindung zwischen dem Gelenk (12) und dem wenigstens einen Wagenteil (10, 11) miteinander kuppelbar sind.

13. Kuppelbarer Übergang (1) nach Anspruch 12,
**dadurch gekennzeichnet,**
**dass** der Balg (13) wenigstens einen Kuppelrahmen (18) aufweist, mit dem dieser an dem Wagenteil (10, 11) lösbar ankuppelbar ist, an dem der Wagenquerträger (14) angeordnet ist und dass der Kuppelrahmen (18) und der Wagenquerträger (14) in einer gemeinsamen Kuppelebene an der Stirnseite des Wagenteils (10, 11) angeordnet sind.

14. Kuppelbarer Übergang (1) nach Anspruch 12 oder 13,
**dadurch gekennzeichnet,**
**dass** wenigstens eine Kupplung zum lösbaren Verbinden von Versorgungsleitungen vorgesehen ist.
